# EUROPÄISCHE PATENTSCHRIFT

(11) **EP 2 058 456 B1**
(45) Veröffentlichungstag und Bekanntmachung des Hinweises auf die Patenterteilung: **02.06.2010**
(21) Anmeldenummer: 08016341.3
(22) Anmeldetag: 17.09.2008
(51) Int. Cl.: E04H 3/16

(54) **Überdachung**
Canopy
Toit

(30) Priorität: 09.11.2007 DE 102007053465
(43) Veröffentlichungstag der Anmeldung: 13.05.2009
(73) Patentinhaber: Paradiso Production GmbH, 77743 Neuried (DE)
(72) Erfinder: Studenik, Franz-Peter, 77743 Neuried-Dundenheim (DE); Fels, Karlheinz, 77743 Neuried-Altenheim (DE)
(74) Vertreter: Geitz Truckenmüller Lucht

(56) Entgegenhaltungen:
- EP-A- 0 779 398
- AU-B2- 523 549
- FR-A- 2 526 469
- FR-A- 2 883 018

## Beschreibung

Die Erfindung betrifft eine teleskopierbare Überdachung, insbesondere für Schwimmbäder, Garten- und Gewächshausbereiche. Eine derartige Überdachung besteht in der Regel aus modularen, ineinander verfahrbaren, die jeweils zu überdachende Fläche überwölbenden Bauelementen, die teleskopartig gegeneinander verfahren werden können und insbesondere derart zusammengeschoben werden, dass sie aufgrund ihrer unterschiedlichen Aufbaugröße in der Längsrichtung im Wesentlichen nur noch die Länge einer der in Längsrichtung im Wesentlichen gleich großen Bauelemente besitzt und der übrige, im Falle vollständig auseinandergezogener Bauelemente überdachte Bereich freigegeben ist.

Die modularen Bauelemente besitzen zumeist eine untere Tragstruktur, die sich beidseits auf so genannten "unteren Trägerprofilen" abstützen, die ihrerseits auf Rädern auf der Aufstellfläche verfahrbar sind und somit die modularen Bauelemente tragen.

Die Trägerprofile sind zusätzlich mit seitlichen Führungselementen versehen, um die Relativführung der modularen Bauelemente untereinander und insbesondere deren transversale Längsbewegung relativ zueinander sicherzustellen.

Die am Markt befindlichen Systeme sind dabei leidlich funktionstüchtig, besitzen aber zumeist Schwächen in der Praxis. So besteht das Problem, dass sich die fraglichen Bauelemente gerne gegeneinander verklemmen, etwa wenn eine Person einseitig ein Bauelement zurückzieht und nicht zwei Personen gleichzeitig an je einer Seite der Bauelemente gleichzeitig mit gleicher Kraft angreifen. Der Grund für dieses Problem ist, dass die Bauelemente aufgrund der hier üblichen Leichtbauweise, die wiederum notwendig ist, um die großflächigen Bauelemente überhaupt bewegen zu können, untereinander nicht hinreichend verwindungssteif sind, so dass sich hierdurch die Führungssysteme gegeneinander verklemmen können, wenn ein Bauelement einseitig bewegt wird. Es ist also oftmals notwendig, dass zwei Personen gleichzeitig an je einer Seite die entsprechenden Bauelemente relativ gegeneinander bewegen. Dies ist in der Praxis oft nicht möglich.

Oftmals genügen bereits Unebenheiten und unterschiedliche Bodenflächen im Aufstellbereich der Überdachung, um die Längsbeweglichkeit der Elemente zu blockieren oder zumindest nennenswert zu erschweren.

Ein erster Lösungsansatz dieses Problems ist aus dem französischen Patent FR-A 25 26 469 bekannt geworden. Hierbei laufen Rollen mit vertikaler Querachse als seitliche Führungsmittel zwischen den modularen Baugruppen oder genauer gesagt, zwischen den unteren Längsträgern dieser modularen Bauelemente, um das Querspiel zwischen den modularen Bauelementen zu beschränken. Der Lösungsansatz ist insbesondere im Hinblick auf die Relativführung der Bauelemente untereinander hilfreich, leistet aber keinen Beitrag zu einer verbesserten Längsbeweglichkeit der Bauelemente untereinander.

In alternativer Gestaltungen ist aus der FR-A 26 204 72 ein verbessertes System bekannt, bei dem über ein Ineinandergreifen von Längsschienen eine Längsführung der Bauelemente untereinander bewirkt ist. Dies wird allerdings mit einem enormen Zuwachs der wirkenden Reibungskräfte erkauft, die die Längsbeweglichkeit der Bauelemente untereinander drastisch erschweren.

In abermals verbesserter Ausführung ist es aus den französischen Patenten FR-A 25 68 288 und FR-A 25 76 955 bekannt, die Führung um eine Rolle mit waagerechter Rotationsachse zu ergänzen, die in ein Führungsprofil der jeweils benachbarten modularen Bauelemente bzw. des unteren Längsträgers dieser modularen Bauelemente eingreift. Dieses System hat sich in der Praxis nicht bewährt, weil schon geringe Verwindungen der beteiligten Bauelemente, etwa aufgrund von Unebenheiten des Aufstellbodens oder wegen verschiedener Rankbelastungen an den Seitenwänden zu einem Blockieren der Rollen in den Führungen führt und somit die beteiligten Bauelemente gegeneinander verkantet werden.

Ergänzend ist es etwa gemäß dem US-Patent US-A 468 36 86 vorbekannt, im Bereich des Aufstellbodens oder auf dem Boden gesonderte Führungsschienen zu verlegen, um so für eine verbesserte Führung der Elemente zu sorgen. Diese Lösung stellt tatsächlich einen hilfreichen Beitrag zur Verbesserung der Längsbeweglichkeit der beteiligten Bauelemente dar, wird aber mit einem erheblichen Zusatzaufwand in Verbindung mit der Erstellung der fraglichen Schienen und den hiermit verbundenen Sockel- und Fundamentarbeiten bezahlt.

In abermaliger Weiterbildung des Standes der Technik ist es aus dem europäischen Patent EP 0 779 398 B1 bekannt, die mit unterseitig angeordneten Laufrollen verfahrbaren unteren Längselemente der modularen Bauelemente um ineinander greifende Seitenführungen zu ergänzen. Hierzu sind die einander benachbarten Baugruppen jeweils mit einem U-förmigen Führungsprofil versehen, das an der jeweils dem anderen Bauelement zugewandten Seite angeformt ist. Die beiden Profile der einander benachbarten Bauelemente sind dabei jeweils gegeneinander versetzt angeordnet. Ebenfalls gegeneinander höhenversetzt angeordnet, weisen die unteren Längsträger der beiden einander benachbarten Bauelemente jeweils in Richtung des jeweils benachbarten Bauträgers in horizontaler Richtung vorspringende Rollenträger auf, die ebenfalls gegeneinander höhenversetzt sind und jeweils mit Rollen bestückt sind, die eine jeweils senkrechte Rotationsachse besitzen. Dabei greift die Rolle des jeweils einen unteren Längsträgers des einen Bauelements in das Führungsprofil des jeweils anderen benachbarten Bauelements ein. Durch diese Rollenanordnung ist zum einen der Relativabstand der gegeneinander längsbeweglich verschiebbaren unteren Längsträger und damit auch der Bauelemente insgesamt definiert vorbestimmt und zum anderen zusätzliche Führung, sowohl in Quer- wie auch in Längsrichtung der beteiligten Bauelemente sichergestellt. Unter Berücksichtigung des Umstandes, dass jedes Bauelement auf wenigstens zwei unteren Laufrädern geführt ist und jede untere Längskante jeweils mit einer in Richtung des jeweils benachbarten Bauelements vorspringenden waagerechten Führungsrolle versehnen ist, ist somit bei der vorbekannten Lösung eine echte Vierpunktführung für derartige teleskopierbare Überdachungen verwirklicht.

Insbesondere ausgehend von dem zuletzt genannten Stand der Technik liegt der Erfindung die Aufgabe zu Grunde, eine abermals verbesserte Führung für derart teleskopierbare modulare Überdachungselemente zu schaffen.

Die der Erfindung zu Grunde liegende Aufgabe wird durch eine Lösung gemäß dem Hauptanspruch gelöst. Vorteilhafte Ausgestaltungen können den abhängigen Ansprüchen entnommen werden.

Gegenüber dem vorbekannten Stand der Technik bietet die erfindungsgemäße Lösung den fertigungstechnischen Vorteil, dass die Trägerprofile der einzelnen Bauelemente baugleich ausgebildet werden können, da die Querstege und Führungsprofile jeweils analog in gleicher Höhe angeordnet werden. Die einzelnen Bauelemente unterscheiden sich nur hinsichtlich ihrer Abmessungen und ihrer Rahmenwerke. Die immer gleichen Profile können damit in der jeweils gewünschten Höhe abgelängt und miteinander bestimmungsgemäß verbunden werden. Ein weiterer Vorteil der erfindungsgemäßen Lösung besteht darin, dass die Querstege der einander benachbart montierten Bauelemente gleichzeitig eine Anschlagssicherung bzw. eine Auszugssicherung für die gegeneinander teleskopierbaren Bauelemente darstellen.

In vorteilhafter Weiterbildung ist im Bereich der unteren Trägerprofile im Querschnitt gesehen auf jeder Seite ein zur Aufnahme der Querrollen geeignetes Führungsprofil angeformt. Dies hat den Vorteil, dass die unteren Trägerprofile universell verwendet werden können, also entweder als Zwischenelement der teleskopierbaren Überdachung oder als vorder- oder rückseitiges Abschlusselement. Im Falle der Verwendung des unteren Trägerprofils für ein als Zwischenelement vorgesehenes Bauelement, also ein Bauelement, dem sowohl ein Bauelement in Schieberichtung vorausgeht wie auch ein weiteres Bauelement in Schieberichtung nachfolgt, das also im zusammengeschobenen Zustand der Überdachung zwischen zwei anderen Bauelementen angeordnet ist, greift jeweils eine Querrolle des linksseitig benachbarten Bauelements in das diesem Bauelement zugewandte Führungsprofil ein, während eine weitere Querrolle des rechtsseitig angeordneten Bauelements in das auf diesem Bauelement zugewandte Führungsprofil eingreift.

Diese beidseitige Verklammerung der Bauelemente zumindest im Bereich der als Zwischenelemente verwendeten Bauelemente führt zu einer weiteren Präzisierung der insoweit verwirklichten Führung der einzelnen Bauelemente im Bereich der teleskopierbaren Überdachung. Sie bewirkt eine deutlich verbesserte Spurtreue, Laufruhe und damit auch eine verbesserte Beweglichkeit und Verschiebbarkeit der einzelnen Bauelemente beim Verfahren der Bauelemente zum Zwecke des Zusammenschiebens oder Ausziehen der einzelnen Bauelemente im Rahmen der teleskopierbaren Überdachung.

Nicht nur, aber auch aus Designgründen ist es vorteilhaft, wenn die Führungsprofile oder zumindest eines der beiden im Bereich der unteren Trägerprofile angeformten Trägerprofile in das insoweit als Rahmenprofil wirkende Trägerprofil integriert sind. Die Vermeidung von außenseitig vorspringenden Kanten verhindert unerwünschte Staubfänger und Stolperkanten. Ein weiterer Vorteil der integrierten Ausbildung der Führungsprofile, also deren Einschluss in ein als Rahmenprofil wirkendes, unteres Trägerprofil besteht darin, dass die Verschmutzung des Führungsprofils zumindest weitgehend ausgeschlossen wird, weil entsprechende Fremd körper oder Spritzwasser nicht mehr in das insoweit abgeschlossene Führungsprofil eindringen können. Spritzwasser führt im Ergebnis zur Veralgung der betroffenen Teile Hierdurch ist sichergestellt, dass die in den Führungsprofilen geführten Querrollen auch noch nach vielen Jahren des Gebrauchs und der Benutzung leicht laufen. Nachdem die Überdachungselemente üblicherweise im Außenbereich angeordnet sind und in diesem Bereich zum Teil erheblichen Verschmutzungen ausgesetzt sind, stellt dies einen weiteren, nicht zu unterschätzenden Vorteil für die Leichtgängigkeit der teleskopierbaren Überdachung dar.

In weiterer Verbesserung dieser Lösung sind die Führungsprofile zumindest nach oben vollständig abgeschlossen ausgebildet. Nachdem Stäube und sonstige Verschmutzungen üblicherweise der Schwerkraft folgend von oben in die Führungsprofile eindringen, ist hierdurch ein wirksamer Schutz vor dem Eindringen von Fremdkörpern und sonstigen Verschmutzungen gewährleistet.

Gemäß den Ansprüchen 6 bis 8 können die Rahmenwerke in unterschiedlicher Weise an die Trägerprofile angeschlossen werden. Die entsprechenden Lösungen bieten jeweils entweder Fertigungsvorteile oder zeichnen sich z. T. durch ein anspruchsvolleres Design im Sinne einer größeren Transparenz des Tragwerks aus.

Aufgrund der im Rahmen der Erfindung verwirklichten, präzisen Spurführung für die einzelnen Bauelemente der teleskopierbaren Überdachung ist es erstmals möglich, die Führungsprofile mit im Bereich der Unterkante der Trägerprofile stirnseitig vorspringenden Befestigungsschellen zu versehen. Aufgrund der präzisen Führung der Bauelemente ist sichergestellt, dass diese in einer definierten Offenstellung oder Schließstellung der Überdachung exakt über im Aufstellgrund vorgesehene Befestigungslöcher verfahren werden können und dann mit entsprechenden Bodenankern unter Verwendung von in den Befestigungsschellen vorgebohrten Befestigungslöchern in dieser Stellung verankert und fixiert werden können. Dies war bisher deshalb nicht möglich, weil die bisherigen Führungen es nahezu nicht erlaubt haben, ein entsprechendes Verankerungsloch im Bereich des Aufstellgrundes beidseitig so präzise anzufahren, dass die einzelnen Bauelemente hier verankert werden können. Dies war allenfalls mit einem erheblichen Justieraufwand der beteiligten Helfer zum öffnen und schließen der bereits bekannten Überdachungen möglich.

Die Erfindung wird nachstehend anhand eines in der Zeichnung nur schematisch dargestellten Ausführungsbeispiels näher erläutert:

Es zeigen:
- Fig. 1: eine Schwimmbad-Überdachung in perspektivischer Ansicht mit mehreren längsbeweglichen Bau- elementen,
- Fig. 2: ein Detail der in Fig. 1 gezeigten längsbeweglichen Bauelemente in perspektivische Ansicht,
- Fig. 3: einen Ausschnitt der Trägerprofile der einander benachbarten Bau- elemente in den Fig. 1 und 2 in einer Ansicht von unten,
- Fig. 4: die unteren Trägerelemente in einer Draufsicht von unten und
- Fig. 5: einen in Fig. 4 bezeichneten Quer- schnitt durch die in Fig. 4 ge- zeigten unteren Trägerprofile,
- Fig. 6: eine Ansicht einander benachbarter Bauelemente von unten,
- Fig. 6.1: ein Detail der in Fig. 6 gezeigten Ansicht und
- Fig. 7: eine Ansicht einander benachbarter Bauelemente anderer Ausführung von unten.

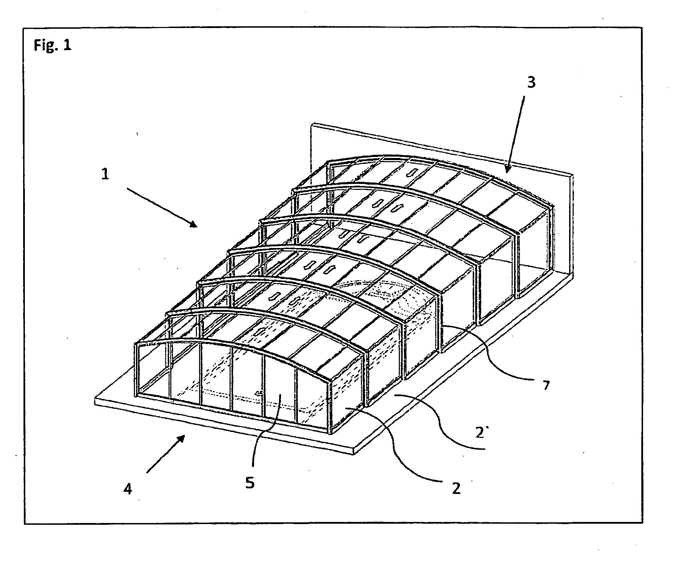

Die in Fig. 1 gezeigte Schwimmbad-Überdachung 1 besteht aus mehreren gegeneinander längsbeweglichen Bauelementen 2, 2', deren Größe von einer Anschlussseite 3 in Richtung einer Offenseite 4 derart abnimmt, dass die Bauelemente 2, 2' teleskopartig ineinander geschoben werden können, um das von der Schwimmbad-Überdachung 1 übergriffene Schwimmbad 5 freizugeben.

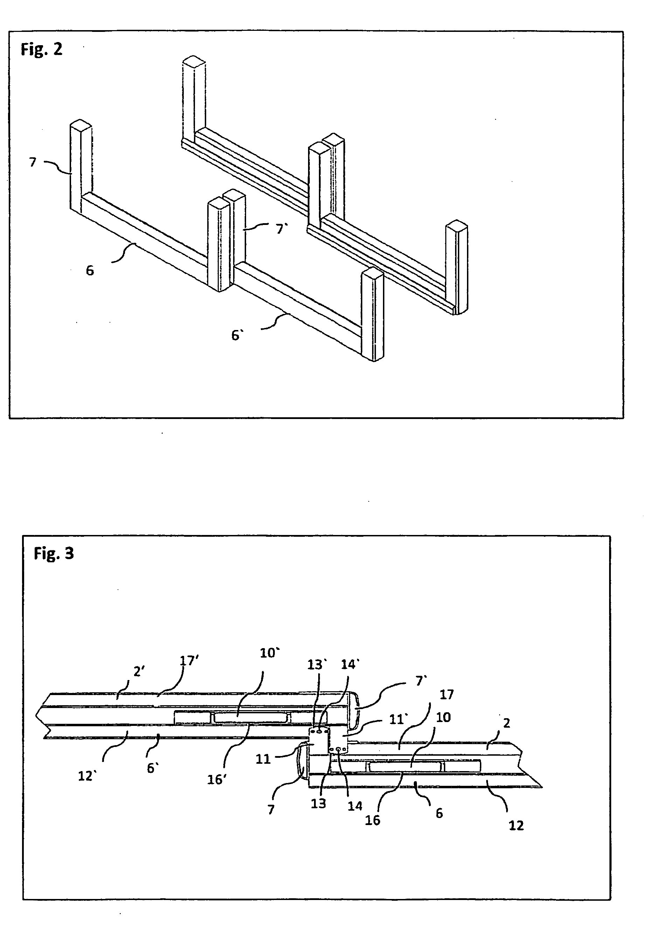

Dabei sind die gegeneinander verschiebbaren Bauelemente 2, 2' jeweils von einem unteren Trägerprofil 6, 6' unterseitig abgeschlossen. An die Trägerprofile 6, 6' schließt sich zumeist auf der Offenseite 4 der jeweiligen Bauelemente 2, 2' ein das Bauelement 2, 2' rahmenartig umgreifendes Rahmenprofil 7 an. Dabei gleiten gemäß der detaillierteren Darstellung in Fig. 2 die unteren Trägerprofile 6, 6' mit den sich anschließenden Rahmenprofilen 7 der jeweils einander nachfolgenden Bauelemente 2, 2' während des Teleskopiervorgangs einander benachbart aneinander in Längsrichtung vorbei.

Dabei ist gemäß Fig. 3 die Längsbeweglichkeit der einander im Teleskop nachfolgenden Trägerprofile 6, 6' durch an der Unterkante jeweils angeordnete Laufrollen 10, 10' gegeben. Die Laufrollen 10, 10' haben eine jeweils horizontale Drehachse. Üblicherweise sind jedem Trägerprofil 6, 6' jeweils zwei voneinander beabstandete Laufrollen 10 zugeordnet, die jeweils im Bereich des stirnseitigen Endes der Trägerprofile 6, 6' auf beiden Seiten der Bauelemente 2, 2' angeordnet sind.

Wie ebenfalls aus Fig. 3 ersichtlich, besitzen die Trägerprofile 6, 6' jeweils in Richtung des benachbart angeordneten Trägerprofils 6 oder 6' vorspringende Querstege 11, 11'.

Die in der in Fig. 3 gezeigten Stellung aneinander angrenzende und wechselseitig als Anschlagelement dienende Querstege 11, 11' begrenzen die Längsbeweglichkeit der einander benachbart und im Teleskop nachfolgend angeordneten Bauelemente 2, 2' relativ zueinander. Darüber hinaus wirken die Querstege 11, 11' in noch näher zu erläuternder Weise miteinander zusammen. An das Trägerprofil 6 ist ein Führungsprofil 17 angeformt, das in Richtung des benachbarten Trägerprofils 6' vorspringt. Umgekehrt ist auch an das Trägerprofil 6' ein in Richtung des Trägerprofils 6 vorspringendes Führungsprofil 12' angeformt. Die Querstege 11, 11' tragen jeweils Querrollen 13, 13' mit senkrecht in den Querstegen 11, 11' gelagerten Drehachsen 14, 14'. Dabei sind die Querrollen 13, 13' drehbeweglich in den hier beteiligten Führungsprofilen 12' und 17 geführt. Auch in die in dem in Fig. 3 gezeigten Ausschnitt an der Führung nicht beteiligten Führungsprofile 17' und 12 greifen analog Querrollen 13, 13' der jeweils nachfolgenden oder vorhergehenden Bauelemente 2, 2' ein, so dass insoweit für jedes Element eine echte Vierpunktführung verwirklicht ist.

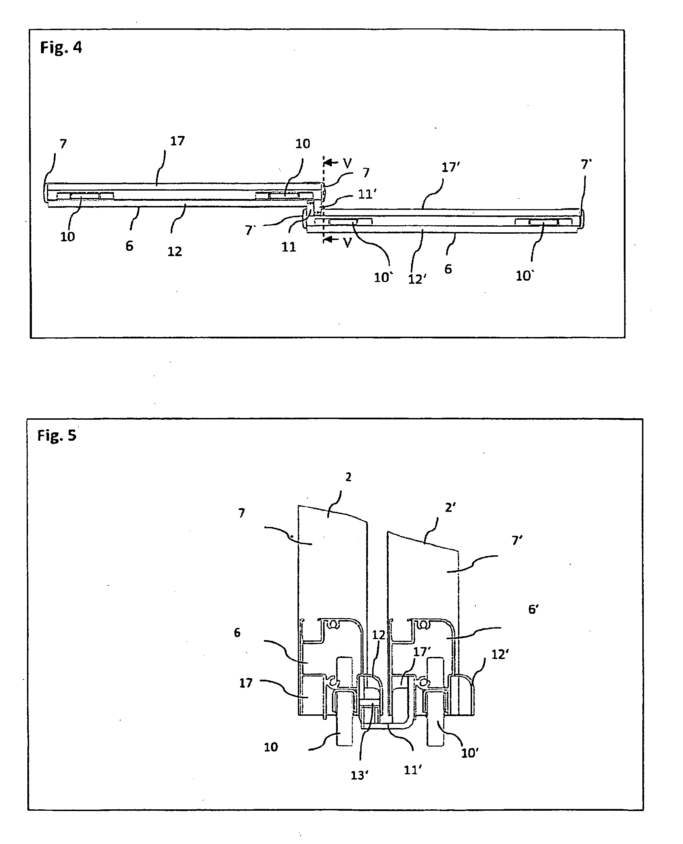

Das Zusammenwirken der Querstege 11, 11' und Querrollen 13, 13' ist auch aus der in Fig. 4 gezeigten Draufsicht ersichtlich.

Die Querschnitt-Ansicht in Fig. 5 zeigt das zusammenspiel der einander benachbarten Bauelemente 2, 2' und deren wechselseitig bewirkte Führung im Detail. In der in Fig. 5 gezeigten Stellung der beteiligten Bauelemente 2, 2' greift der Trägersteg 11' unterseitig in das Führungsprofil 12 des benachbarten Bauelements 2 mit der Querrolle 13' ein. Die Querrolle 13' ist dabei bei einer Längsbewegung der Bauelemente 2, 2' relativ zueinander in Längsrichtung innerhalb des Führungsprofils 12 geführt. Dabei bewegen sich die Bauelemente 2, 2' auf ihren jeweiligen Laufrollen 10, 10' gegeneinander. Sollten dabei etwaige Unebenheiten des Aufstellgrundes überfahren werden, so sind hierzu die Führungsprofile 12, 12', 17, 17' derart dimensioniert, dass den in den Führungsprofilen aufgenommenen Querrollen 13, 13' ein hinreichender Abstand zum oberen und unteren Abschluss der Führungsprofile 12, 12', 17, 17' als Federweg unbenommen ist, so dass unbeschadet der erwähnten Unebenheiten die Führungen weiterhin gewährleistet sind und insbesondere nicht verklemmen. Der oberseitige Abschluss der Führungsprofile 12, 12', 17, 17' vermeidet, dass die Führungsprofile 12, 12', 17, 17' sich nach und nach mit Schmutz zusetzen und die Leichtgängigkeit der Führung der Bauelemente 2, 2' hierdurch beeinträchtigt wird. Etwaiger Abrieb der Querrollen 13, 13' kann dabei ohne Weiteres durch die nach unten geöffneten Führungsprofile 12, 12', 17, 17' herausfallen.

Die beiden vorstehend diskutierten Führungsprofile 12, 12', 17, 17' sind an das untere Trägerprofil 6, 6' in der hier diskutierten Querschnitt-Ansicht jeweils rechtsseitig angeformt und, wie erwähnt, nach oben abgeschlossen. Nachdem die Bauelemente 2, 2' aber durchaus als Zwischenelemente innerhalb der teleskopartig aufgebauten Überdachung angeordnet sein können, sich also etwa an das Bauelement 2 auf der linken Seite ein weiteres Bauelement anschließen könnte, ist in das Trägerprofil 6, 6' jeweils ein weiteres geeignetes Führungsprofil 17, 17' in der Querschnittdarstellung links von den jeweiligen Laufrädern 10, 10' integriert. Das weitere Führungsprofil 17 bzw. 17' dient zur Aufnahme eines jeweils auf der linken Seite in dieser Darstellung angeordneten weiteren Bauelements. In der hier vorliegenden Darstellung, allerdings nicht in der hier gezeigten Schnittebene, greift also ein Trägersteg 11 des Bauelements 2 mit einer Querrolle 13 in das weitere Führungsprofil 17' des Bauelements 2' ein. Hierdurch ist die erwähnte Doppelführung oder unter Berücksichtigung der beiden Laufräder 10 bzw. 10' jedes Bauelements eine Vierpunkt-Führung für jedes der Bauelemente 2, 2' verwirklicht. Dadurch, dass die weiteren Führungsprofile 17, 17' integraler Bestandteil der Trägerprofile 6, 6' sind, ist auch hier sichergestellt, dass eine Verschmutzung der durch die Führungsprofile 17, 17' und d er beteiligten Querrollen verwirklichten Führung ausgeschlossen ist. Ein weiterer Vorteil dieser Lösung besteht darin, dass im Unterschied zur Anformung der Führungsprofile 12; 12' keine überstehenden Kanten gebildet sind und somit ein insgesamt schlanker Aufbau der unteren Trägerprofile 6, 6' ermöglicht ist. Der schlanke Aufbau der Trägerprofile 6, 6' ist deshalb sinnvoll, weil hierdurch zum einen sichergestellt sein kann, dass die beteiligten Bauelemente 2, 2' relativ eng benachbart aneinander vorbei gleiten können, was im Bereich der Fugen anzuordnende Dichtungen sowohl in der Montage, als auch in der Funktion verbessert. Im Übrigen ist die Gesamtbreite der nebeneinander zusammengeschobenen Bauelemente 2, 2' bei vollkommen geöffneter Überdachung aufgrund des schlanken Aufbaus der Trägerprofile deutlich reduziert, so dass der Platzbedarf der Überdachung im Ergebnis ebenfalls reduziert ist und beispielsweise bei gleicher Größe eines Schwimmbadbereichs eine größere Beckenbreite realisiert werden kann.

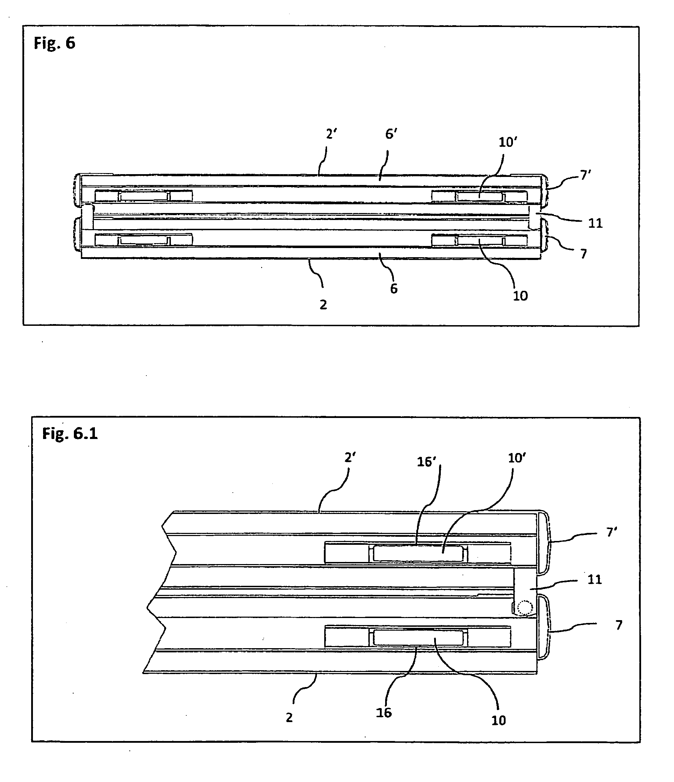

In der Detailansicht gemäß Fig. 6 ist zum einen dargestellt, wie die Laufräder in den unteren Trägerprofilen 6, 6' verankert sind. Insbesondere gemäß der Detailansicht in Fig. 6.1 ist ersichtlich, dass die Laufräder in einer geeigneten Aussparung des unteren Trägerprofils geführt sind und hier mit ihren jeweiligen horizontalen Drehachsen 16, 16' gelagert sind.

Ebenfalls aus der unter Ansicht in den Fig. 6 und 6.1 ersichtlich, schließt sich im Stirnseitenbereich an die unteren Trägerprofile 6, 6' jeweils ein Rahmenprofil 7', 7 an, wobei in der Ausführung gemäß Fig. 6 bzw. 6.1 das Rahmenprofil 7, 7' jeweils auf das untere Trägerprofil aufgesetzt und mit diesem verschraubt ist.

Alternativ kann das Rahmenprofil 7, 7' jeweils auch derart an den jeweiligen Stirnseiten an den unteren Trägerprofilen 6, 6' montiert sein, dass die jeweiligen Unterkanten der Trägerprofile 6, 6' und der Rahmenprofile 7, 7' bündig miteinander abschließen, wobei in diesem Falle die Rahmenprofile von den jeweiligen Stirnseiten her mit den sich anschließenden Trägerprofilen 6, 6' verschraubt sind.

In der aufwendigsten, aber designtechnisch anspruchsvollsten Lösung sind die Rahmenprofile 7, 7' jeweils derart mit Ausfräsungen versehen, dass die Trägerprofile 6, 6' mit ihren integrierten Führungsprofilen 12, 12' formschlüssig mit dem sich anschließenden Rahmenprofil 7, 7' verbunden werden können.

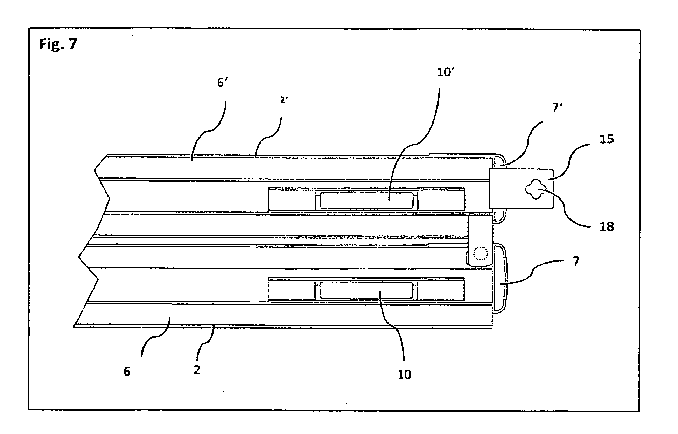

In einer weiteren Ansicht gemäß Fig. 7 der unteren Trägerprofile 6, 6' von unten ist eine weitere Ausgestaltung der Erfindung dargestellt. Gemäß der Darstellung in Fig. 7 weist das untere Trägerprofil 6' des Bauelements 2' im Bereich der Unterkante des unteren Trägerprofils 6' eine stirnseitig vorspringende Befestigungslasche 15 mit einem geeigneten Befestigungsloch 18 für einen durch das Befestigungsloch 18 durchzuführenden und mit dem Aufstellgrund zu verbindenden Anker auf. Aufgrund der Präzision der vorstehend beschriebenen Teleskopführung für die einzelnen Bauelemente 2, 2' der Überdachung 1 ist es möglich, die jeweiligen Bauelemente 2, 2' exakt so zu positionieren, dass sie über ein im Aufstellgrund vorgesehenes Loch so verfahren werden können, dass das entsprechende Befestigungsloch 18 mit dem Ankerloch im Aufstellgrund fluchtet und der hier nicht weiter dargestellte Anker zur Verankerung des jeweiligen Bauelements 2, 2' in einer definierten Stellung eingesetzt werden kann. Selbstverständlich können innerhalb des Aufstellgrundes in der Spur eines Bauelements unterschiedliche Ankerlöcher vorgesehen sein, um die jeweiligen Bauelemente 2, 2' in unterschiedlichen Positionen zu verankern. Die Verankerung der Bauelemente ist deshalb sinnvoll, weil hierdurch vermieden wird, dass die Überdachungselemente, insbesondere aufgrund der Leichtläufigkeit der hier beschriebenen Teleskopführung vom Wind unbeabsichtigt verfahren werden und zwischen einer Schließ- und einer Offenstellung der Überdachung unkontrolliert hin- und herbewegt werden.

### BEZUGSZEICHENLISTE

- 1: Schwimmbad-Überdachung
- 2, 2': Bauelemente
- 3: Anschlussseite
- 4: Offenseite
- 5: Schwimmbad
- 6, 6': Trägerprofil
- 7: Rahmenprofil
- 10: Laufrolle
- 11, 11': Quersteg
- 12, 12': Führungsprofil
- 13, 13': Querrolle
- 15: Befestigungsschelle
- 16, 16': Drehachse
- 17, 17': weitere Führungsprofile
- 18: Befestigungsloch

## Patentansprüche

1. Überdachung, insbesondere für Schwimmbäder, Außenbereiche oder sonstige Freiflächen, mit
- wenigstens zwei modularen Bauelementen (2, 2'), die teleskopartig ineinander verschiebbar sind und jeweils beidseits eine untere Trägerstruktur umfassen, die jeweils von einem unteren im Wesentlichen in horizontaler Richtung angeordneten Trägerprofil (6, 6') unterseitig abgeschlossen ist, wobei dieses Trägerprofil (6, 6') mittels wenigstens zweier unterseitig angeordneter Laufrollen (10), die auf einem Aufstellgrund laufen, längsbeweglich gegeneinander angeordnet sind,
- wobei die unteren Trägerprofile (6, 6') jeweils beidseits eine in Richtung des jeweils nachfolgenden und benachbart angeordneten Trägerprofils (6, 6') vorspringenden Quersteg (11, 11') besitzen, der jeweils eine Querrolle (13, 13') mit jeweils senkrechter Rotationsachse trägt, wobei die Rotationsachse der Querrolle (13, 13') jeweils in diesem Quersteg (11, 11') drehbar gelagert ist,
- **dadurch gekennzeichnet, dass** die Querstege (11, 11') jeweils im Bereich des stirnseitigen Endes des jeweiligen Trägerprofils (6, 6') derart angeordnet sind, dass der Quersteg (11, 11') des einen Trägerprofils (6, 6') am vorderen Ende angeordnet ist und der jeweils an den benachbart und nachfolgend angeordneten Trägerprofil (6, 6') angeordnete Trägersteg am hinteren Ende dieses anderen Trägerprofils (6, 6') angeordnet ist und vice versa im Bereich etwa weiterer nachfolgender Bauelemente (2, 2'),
- wobei die Querrollen (13, 13') des einen Trägerprofils (6, 6') jeweils in ein Führungsprofil (12, 12', 17, 17') des jeweils anderen Trägerprofils (6, 6') eingreifen, wobei die Führungsprofile (12, 12', 17, 17') jeweils benachbarter Bauelemente (2, 2') einander zugewandt in jeweils zumindest annähernd gleicher Höhe angeordnet sind.

2. Überdachung nach Anspruch 1, **dadurch gekennzeichnet, dass** im Querschnitt der unteren Trägerprofile (6, 6') jeweils beidseits außenseitig je ein Führungsprofil (12, 12', 17, 17') zur Aufnahme der Querrollen (13, 13') angeformt ist.

3. Überdachung nach Anspruch 1 oder 2, **dadurch gekennzeichnet, dass** wenigstens eines der beiden Führungsprofile (12, 12' oder 17, 17') als integraler Bestandteil in das jeweilige Trägerprofil (6, 6') integriert ist.

4. Überdachung nach einem der vorhergehenden Ansprüche, **dadurch gekennzeichnet, dass** die Führungsprofile (12, 12', 17, 17') jeweils zumindest nach oben vollständig geschlossen ausgebildet sind.

5. Überdachung nach Anspruch 4, **dadurch gekennzeichnet, dass** die Führungsprofile (12, 12', 17, 17') jeweils derart dimensioniert sind, dass ein oberer Abschluss der Führungsprofile (12, 12', 17, 17') jeweils um einen definierten Federweg von der in Richtung des oberen Abschlusses weisenden Oberkante, der in dem Führungsprofil (12, 12', 17, 17') aufgenommenen Querrollen (13, 13') beabstandet angeordnet ist.

6. Überdachung nach einem der vorhergehenden Ansprüche, **dadurch gekennzeichnet, dass** das untere Trägerprofil (6, 6') sich über die gesamte Länge des Bauelements (2, 2') in Längsrichtung an der Unterkante erstreckt und sich jeweils an der Stirnseite des Trägerprofils (6, 6') beidseits ein Rahmenprofil (7, 7') zur Einfassung des Bauelements (2, 2') anschließt und hierzu seitlich angeschraubt ist.

7. Überdachung nach einem der vorhergehenden Ansprüche 1 bis 5, **dadurch gekennzeichnet, dass** sich stirnseitig an das untere Trägerprofil (6, 6') an jeder Stirnseite ein Rahmenprofil derart anschließt, dass es mit entsprechenden seitlichen Ausfräsungen versehen und stirnseitig angeschraubt ist.

8. Überdachung nach einem der vorhergehenden Ansprüche 1 bis 5, **dadurch gekennzeichnet, dass** das Trägerprofil (6, 6') mit den Rahmenprofilen von unterwärts verschraubt ist und die Rahmenprofile ihrerseits stirnseitig mit einem Abschlussdeckel verschlossen sind.

9. Überdachung nach einem der vorhergehenden Ansprüche, **dadurch gekennzeichnet, dass** zumindest bei einigen der Bauelemente (2, 2') der Überdachung im Bereich der jeweiligen unteren Trägerprofile (6, 6') zumindest annähernd auf Höhe der dem Aufstellgrund zugewandten Unterkante stirnseitig vorspringende, wenigstens auf einer Stirnseite, eine Befestigungsschelle mit jeweils wenigstens einem geeigneten Befestigungsloch angeordnet ist.

## Claims

1. A canopy, in particular for swimming pools, outside areas or other open spaces, having
- at least two modular components (2, 2'), which are telescopically displaceable in one another, and each comprise a lower support structure on both sides, which are each terminated on the lower side by a lower support profile (6, 6') situated essentially in the horizontal direction, these support profiles (6, 6') being situated so they are longitudinally movable to one another using at least two running rollers (10) situated on the lower side,
- the lower support profiles (6, 6') each having a transverse web (11, 11') protruding on both sides in the direction of the respective following support profile (6, 6'), which is situated adjacent, each transverse web (11, 11') carrying a transverse roller (13, 13') having a perpendicular rotational axis, the rotational axis of each transverse roller (13, 13') being mounted so it is rotatable in this transverse web (11, 11'),
- **characterized in that** the transverse webs (11, 11') are each situated in the area of the frontal end of the respective support profile (6, 6') in such a way that the transverse web (11, 11') of one support profile (6, 6') is situated on the front end and the support web situated on the adjacent support profile (6, 6'), which is situated following it, is situated on the rear end of this other support profile (6, 6'), and vice versa in the area of any further following components (2, 2'),
- the transverse rollers (13, 13') of one support profile (6, 6') each engaging in a guide profile (12, 12', 17, 17') of the respective other support profile (6, 6'), the guide profiles (12, 12', 17, 17') of adjacent components (2, 2') each being situated facing toward one another at at least approximately equal height.

2. The canopy according to Claim 1, **characterized in that** a guide profile (12, 12', 17, 17') for receiving the transverse rollers (13, 13') is shaped into the cross-section on both sides on the outside of each of the lower support profiles (6, 6').

3. The canopy according to Claim 1 or 2, **characterized in that** at least one of the two guide profiles (12, 12' or 17, 17') is integrated as an integral component into the respective support profile (6, 6').

4. The canopy according to one of the preceding claims, **characterized in that** the guide profiles (12, 12', 17, 17') are each implemented as completely closed at least on top.

5. The canopy according to Claim 4, **characterized in that** the guide profiles (12, 12', 17, 17') are each dimensioned in such a way that an upper terminus of the guide profiles (12, 12', 17, 17') is situated spaced apart in each case by a defined spring travel from the upper edge, pointing in the direction of the upper terminus, of the transverse rollers (13, 13') received in the guide profile (12, 12', 17, 17').

6. The canopy according to one of the preceding claims, **characterized in that** the lower support profile (6, 6') extends over the entire length of the component (2, 2') in the longitudinal direction on the lower edge and a frame profile (7, 7') adjoins the front side of the support profile (6, 6') on both sides to surround the component (2, 2') and is screwed on laterally for this purpose.

7. The canopy according to one of preceding Claims 1 through 5, **characterized in that** a frame profile adjoins frontally on the lower support profile (6, 6') on each front side in such a way that it is provided with corresponding lateral milled grooves and is screwed on frontally.

8. The canopy according to one of preceding Claims 1 through 5, **characterized in that** the support profile (6, 6') is screwed onto the frame profiles from below and the frame profiles are in turn closed frontally using a terminus lid.

9. The canopy according to one of the preceding claims, **characterized in that**, at least in the case of some of the components (2, 2') of the canopy, on at least one front side, a fastening clip having at least one suitable fastening hole in each case is situated in the area of the respective lower support profiles (6, 6') protruding frontally at least approximately at the height of the lower edge facing toward the set-up base.

## Revendications

1. Abri, en particulier pour des piscines, des zones extérieures ou autres surfaces en plein air, avec
- au moins deux éléments de construction modulaires (2, 2'), pouvant coulisser l'un dans l'autre de façon télescopique et comprennent chacun des deux côtés une structure portante inférieure, qui est fermée sur la face inférieure par un profilé portant (6, 6') disposé dans le sens sensiblement horizontal, ces profilés portants (6, 6') étant disposés de façon mobile longitudinalement l'un par rapport à l'autre au moyen de deux roulettes (10) disposées sur la face inférieure et roulant sur un support d'installation,
- dans lequel les profilés portants (6, 6') inférieurs possèdent de chaque côté une traverse (11, 11') dépassant en direction du profilé portant (6, 6') suivant et voisin, qui respectivement porte un rouleau transversal (13, 13') dont l'axe de rotation respectivement est vertical, l'axe de rotation du rouleau transversal (13, 13') étant respectivement supporté avec possibilité de rotation dans cette traverse (11, 11'),
**caractérisé en ce que** les traverses (11, 11') sont disposées chacune au niveau de l'extrémité frontale de chaque profilé portant (6, 6') de telle manière que la traverse (11, 11') d'un profilé portant (6, 6') soit disposée à l'extrémité antérieure et que la traverse portante disposée sur le profilé portant (6, 6') voisin et suivant soit disposée sur l'extrémité postérieure de cet autre profilé portant (6, 6'), et vice versa dans la région d'éventuels autres éléments de constructions (2, 2') suivants,
- les rouleaux transversaux (13, 13') d'un profilé portant (6, 6') se mettant en prise dans un profilé de guidage (12, 12', 17, 17') de l'autre profilé portant (6, 6'), les profilés de guidage (12, 12', 17, 17') d'éléments de construction (2, 2') voisins étant tournés l'un vers l'autre et disposés au moins approximativement à la même hauteur.

2. Abri selon la revendication 1, **caractérisé en ce qu'**il est formé respectivement dans la section des profilés portants (6, 6') inférieurs, des deux côtés sur l'extérieur, un profilé de guidage (12, 12', 17, 17') destiné à recevoir les rouleaux transversaux (13, 13').

3. Abri selon la revendication 1 ou 2, **caractérisé en ce qu'**au moins un des deux profilés de guidage (12, 12' ou 17, 17') fait partie intégrante du profilé portant (6, 6') correspondant.

4. Abri selon l'une des revendications précédentes, **caractérisé en ce que** les profilés de guidage (12, 12', 17, 17') sont respectivement complètement fermés au moins vers le haut.

5. Abri selon la revendication 4, **caractérisé en ce que** les profilés de guidage (12, 12', 17, 17') sont respectivement dimensionnés de telle façon qu'une fermeture supérieure des profilés de guidage (12, 12', 17, 17') soit distante selon une course d'élasticité définie du bord supérieur dirigé vers la terminaison supérieure des rouleaux transversaux (13, 13') logés dans le profilé de guidage (12, 12', 17, 17').

6. Abri selon l'une des revendications précédentes, **caractérisé en ce que** le profilé portant (6, 6') inférieur s'étend sur toute la longueur de l'élément de construction (2, 2') dans le sens longitudinal sur le bord inférieur et un profilé de cadre (7, 7') se raccorde sur chaque face d'extrémité du profilé portant (6, 6') pour renfermer l'élément de construction (2, 2') et est vissé dessus latéralement.

7. Abri selon l'une des revendications 1 à 5, **caractérisé en ce qu'**un profilé de cadre se raccorde sur la face d'extrémité du profilé portant (6, 6') inférieur sur chaque face d'extrémité de telle façon qu'il est muni de découpes latérales correspondantes et vissé sur la face d'extrémité.

8. Abri selon l'une des revendications 1 à 5, **caractérisé en ce que** le profilé portant (6, 6') est vissé avec les profilés de cadre par dessous et les profilés de cadre sont pour leur part fermés sur leur face d'extrémité par un couvercle de fermeture.

9. Abri selon l'une des revendications précédentes, **caractérisé en ce qu'**il est formé sur au moins certains des éléments de construction (2, 2') de l'abri, dans la région des profilés portants (6, 6') inférieurs correspondants, en saillie sur la face d'extrémité au moins approximativement à la hauteur du support d'installation, au moins sur une face d'extrémité un collier de fixation avec au moins un trou de fixation adéquat.
